Europäisches Patentamt

European Patent Office

Office européen des brevets

(19)

(11) **EP 0 928 872 A1**

(12) **EUROPÄISCHE PATENTANMELDUNG**

(43) Veröffentlichungstag:
14.07.1999 Patentblatt 1999/28

(21) Anmeldenummer: 98121086.7

(22) Anmeldetag: 06.11.1998

(51) Int. Cl.$^6$: **E05F 15/00**, E05F 15/16,
F16H 35/10, G01L 3/14,
G01L 5/00, G01L 5/12,
H02K 7/116

(84) Benannte Vertragsstaaten:
**AT BE CH CY DE DK ES FI FR GB GR IE IT LI LU
MC NL PT SE**
Benannte Erstreckungsstaaten:
**AL LT LV MK RO SI**

(30) Priorität: **07.01.1998 DE 19800194**

(71) Anmelder: **ROBERT BOSCH GMBH
70442 Stuttgart (DE)**

(72) Erfinder:
• **Heib, Johannes
77886 Lauf (DE)**
• **Knab, Norbert
77767 Appenweier (DE)**
• **Aab, Volker
96145 Sesslach/Heilgersdorf (DE)**

(54) **Elektromotorischer Antrieb**

(57) Es wird ein elektromotorischer Antrieb (10, 110) mit einem Elektromotor vorgeschlagen, mit einer in ein Getriebe eingreifende Motorankerwelle (12, 112), die getriebeseitig eine Getriebeschnecke (14, 114) aufweist, die mit einem Schneckenrad (16, 116) in Eingriff steht. Die Getriebeschnecke (14, 114) ist zur Verbesserung eines Einklemmschutzes eines vom Antrieb (10, 110) betätigten Stellteiles (18) in Richtung der Drehachse (22, 122) der Motorankerwelle (12, 112) in wenigstens einer Axialrichtung bzw. Umfangsrichtung gegen eine Kraft (F) beweglich und in Drehrichtung bzw. Axialrichtung der Motorankerwelle (12, 112) drehfest bzw. verschiebfest an der Motorankerwelle (12, 112) angeordnet.

**Fig. 1**

EP 0 928 872 A1

## Beschreibung

Stand der Technik

Die Erfindung geht aus von einem elektromotorischen Antrieb nach der Gattung der nebengeordneten Hauptansprüche 1 und 10.

Zur Verstellung von Stellteilen werden in Kraftfahrzeugen in zunehmendem Maße elektromotorische Antriebe eingesetzt. Durch die selbsttätige und vom Benutzer nicht unmittelbar beeinflußbare Bewegung der Stellteile durch den Antrieb ist die Gefahr, daß das Stellteil einen Gegenstand oder ein Körperteil an einem Endanschlag einklemmt, im Vergleich zu manuellen Antrieben vergrößert. Moderne elektromotorische Antriebe sind deshalb mit Schutzmechanismen versehen, die das Stellteil im Einklemmfall stoppen oder reversieren.

Der Einklemmfall wird üblicherweise indirekt, durch Erfassung und Auswertung des Bewegungswegsverhaltens des Stellteils, detektiert. Aus Komfortgründen haben Stellteile wie Fensterheber in modernen Kraftfahrzeugen beträchtliche Geschwindigkeiten, so daß die Detektion sehr schnell erfolgen muß. Besonders schwer ist das Einklemmen harter Gegenstände, also von Gegenständen mit einer großen Federkonstanten, zu erkennen, da sich eine große Einklemmkraft innerhalb eines sehr kleinen Verstellweges des einklemmenden Stellteils aufbaut. Dazu gehören insbesondere menschliche Gliedmaßen. Abhilfe kann geschaffen werden, indem die Verstellgeschwindigkeit des bewegten Stellteils in Zonen von der Größenordnung der in Frage kommenden Körperteile abgesenkt wird. Eine solche Maßnahme ist in der DE-OS 44 44 762 offenbart. Dabei muß jedoch eine beträchtliche Reduzierung der Verstellgeschwindigkeit in Kauf genommen werden, wodurch der Bedienkomfort stark beeinträchtigt wird. Ferner kann bei Einsatz der vorgenannten indirekten Verfahren oft nicht hinreichend genau zwischen Bewegungsanomalien des Stellteils, die z.B. auf Erschütterungen des Fahrzeugs beruhen, und solchen, die auf einen Einklemmfall zurückgehen, unterschieden werden.

Die DE 296 13 281 U1 dagegen offenbart einen Stellantrieb, der mit einer möglichst zügigen Verstellgeschwindigkeit das Stellteil bewegt. Die hohe Kraftspitze, die bei einem Anlaufen des Stellteils gegen ein Hindernis aufgrund der Masseträgheit des Antriebs entstehen würde, wird durch ein elastisches Dämpfungselement abgefangen. Dieses ist zwischen dem Getriebe und dem Antrieb einer Elektromotor-Getriebe-Antriebseinheit angeordnet.

Aus einer noch nicht veröffentlichten Patentanmeldung (AZ 196 53 962) ist bereits ein elektromotorischer Antrieb mit einer Motorankerwelle vorgeschlagen worden, die in ein Getriebe verlängert ist. Eine getriebeseitig an der Motorankerwelle angeordnete Getriebeschnecke steht mit einem Schneckenrad in Eingriff. Das Schneckenrad ist über elastische Federmittel mit einem Abtriebsglied verbunden. Bewegt sich das Schneckenrad in einer seiner beiden Drehrichtungen, so liegt ein an dem Schneckenrad angeordneter Zapfen in einer Nut des Abtriebsgliedes an, und das Abtriebsdrehmoment wird unmittelbar übertragen. Bei Bewegung in der anderen Drehrichtung wird das Abtriebsdrehmoment gegen die Kraft des Federmittels auf das Abtriebsglied übertragen.

Vorteile der Erfindung

Der elektromotorische Antrieb mit den Merkmalen des Anspruchs 1 hat den Vorteil, daß die Gesamtfederrate des Antriebs verringert ist. Bei Anlauf eines von dem Antrieb bewegten Stellteils gegen einen Endanschlag oder ein Hindernis im Verstellweg verzögert sich der Aufbau einer maximal zulässigen Einklemmkraft, da sich der Motorweg bei festgesetzten Stellteil verlängert. Ein Teil der kinetischen Energie des bewegten Stellteils wird aufgrund der Kraft, gegen die die Getriebeschnecke in wenigstens einer axialen Richtung auf der Motorankerwelle beweglich ist, durch den Elektromotor aufgenommen. Die Kraft, gegen die die Getriebeschnecke beweglich ist, kann so eingestellt werden, daß die durch den Elektromotor des Antriebs aufgenommene Energie an die Größe und Masse des bewegten Stellteils, seine Geschwindigkeit und andere Parameter angepaßt ist.

Verbesserungen und Weiterbildungen des elektromotorischen Antriebs nach dem nebengeordneten Anspruch 1 ergeben sich aus den davon abhängigen Ansprüchen.

Vorteilhaft ist die Getriebeschnecke gegen die Kraft wenigstens eines Federmittels in axialer Richtung zur Motorankerwelle beweglich. Wenn das Federmittel eine wegunabhängige Federkonstante $c$ hat, ist die gespeicherte Energie gleich $1/2c * s^2$, wobei $s$ der Weg ist, um den sich die Getriebeschnecke auf der Motorankerwelle gegen die Kraft bewegt. Das Federmittel ist einfach und kostengünstig im Motor anzuordnen und der Motor kann durch die Auswahl unterschiedlicher Federmittel an verschiedene Anwendungsfälle angepaßt werden.

Die axiale Verschiebbarkeit bei gleichzeitig drehfester Anordnung der Getriebeschnecke an der Motorwelle kann leicht dadurch erreicht werden, daß die Getriebeschnecke eine Ausnehmung mit nicht kreisförmigen Querschnitt aufweist, und daß die Motorankerwelle im Bewegungsbereich der Getriebeschnecke einen Abschnitt aufweist, der die Ausnehmung der Getriebeschnecke formschlüssig, aber axial verschiebbar durchgreift. Durch diese Anordnung wird eine gute Drehmitnahme und gleichzeitig eine leichte Verschiebbarkeit der Getriebeschnecke gewährleistet.

Ein einfach herzustellender Querschnitt ergibt sich beispielsweise, wenn die Motorankerwelle ein Mehrkantprofil, insbesondere ein Vierkantprofil aufweist.

Wenn für den elektromotorischen Antrieb gleichzeitig noch Mittel zur Erfassung der axialen Verschiebung der Getriebeschnecke vorgesehen sind, kann die von einem von dem elektromotorischen Antrieb bewegten Teil ausgeübte Kraft direkt über den Verschiebeweg der Getriebeschnecke und das übersetzungsverhältnis des Getriebes des Antriebs bestimmt werden.

Weitere Verbesserungen des elektromotorischen Antriebs nach dem Anspruch 1 ergeben sich aus den davon abhängigen Ansprüchen.

Die Erfindung betrifft auch einen elektromotorischen Antrieb nach dem nebengeordneten Hauptanspruch 10. Auch der elektromotorische Antrieb in dieser Ausführungsform hat den Vorteil, daß die Federrate des Gesamtsystems verringert ist.

Vorteilhaft kann auch hier die Getriebeschnecke gegen die Kraft wenigstens eines Federmittels relativ zur Motorankerwelle beweglich sein.

Besonders vorteilhaft werden die beiden erfindungsgemäßen elektromotorischen Antriebe eingesetzt, wenn sie durch eine signalverarbeitende Anordnung in Abhängigkeit der von dem Stellteil auf den Endanschlag oder das Hindernis ausgeübten Kraft sowie weiterer Parameter gesteuert oder geregelt werden, und die von dem Stellteil ausgeübte Kraft durch Erfassung und Auswertung des Bewegungsverhaltens des Stellteils und/oder des Antriebs bestimmt wird, und der Antrieb angehalten oder reversiert wird, wenn die bestimmte Kraft einen vorgebbaren Grenzwert überschreitet. Wie oben bereits ausgeführt, ist durch die Verringerung der Federrate des Antriebssystems die Reaktionszeit vergrößert. Zur Steuerung oder Regelung des Antriebs können deshalb weniger leistungsfähige signalverarbeitende Anordnungen und Sensoren zur Erfassung des Bewegungsverhaltens eingesetzt werden, wodurch die Kosten für das System verringert werden und gleichzeitig ein wirkungsvoller Einklemmschutz auch für harte Einklemmgegenstände realisierbar ist. Unter dem Bewegungsverhalten wird hier die Position des Stellteils und/oder Antriebs, dessen Geschwindigkeit und weitere abgeleitete, auf den Ort oder die Position bezogene Größen, etwa die Beschleunigung, verstanden.

Das Bewegungsverhalten des Stellteils kann besonders einfach durch Auswertung des Motorstroms des Antriebs und/oder einer davon abgeleiteten Größe bestimmt werden. Bei Kommutatormotoren ist beispielsweise dem Gleichstrom, der dem Motor zugeführt wird, aufgrund der Spannungsinduktion bei der Motordrehung ein hochfrequentes Signal überlagert, dessen Frequenz von der Motordrehzahl abhängt. Durch Auswertung dieses Signales ("ripple count") kann die Motordrehzahl und damit das Bewegungsverhalten ohne weitere Sensoren erfaßt werden.

Alternativ oder zusätzlich kann das Bewegungsverhalten des Stellteils vorteilhaft durch Auswertung der Signale eines Drehzahlsensors im Antrieb, insbesondere eines inkrementellen Bewegungssensors, bestimmt werden. Die inkrementellen Bewegungssensoren ermöglichen eine sehr genaue Erfassung des Bewegungsverhaltens. Insbesondere kann bei Einsatz zweier Sensoren die Bewegungsrichtung des Antriebs bestimmt werden.

Gemäß einer vorteilhaften Weiterbildung des Verfahrens zum Betreiben des elektromotorischen Antriebs wird der Grenzwert abhängig von der Position des Stellteils, insbesondere nach Maßgabe gesetzlicher Vorschriften, festgelegt. So sind etwa in der FMVSS 118, einer in den USA für Fensterheber und Schiebedächer in Kraftfahrzeugen gültigen Vorschrift, in ihren mechanischen Eigenschaften menschlichen Körperteilen nachgebildete Testgegenstände vorgesehen, bei deren Einklemmen festgelegte Maximalwerte für die wirkende Einklemmkraft nicht überschritten werden dürfen. Ein Einklemmen kann aber erst erfolgen, wenn die verbleibende öffnung zwischen Stellteil und Anschlag die Größe des Einklemmgegenstandes erreicht hat. Die Festlegung des Grenzwerts abhängig von der Position hat den Vorteil, daß nicht der gesamte Bewegungsweg des Stellteils überwacht werden muß, sondern daß eine Überwachung erst in den relevanten Bereichen erfolgen kann.

Weitere vorteilhafte Weiterbildungen und Verbesserungen des erfindungsgemäßen Verfahrens ergeben sich aus den vom unabhängigen Anspruch 12 abhängigen Ansprüchen und in Verbindung mit der nachfolgenden Beschreibung.

Zeichnung

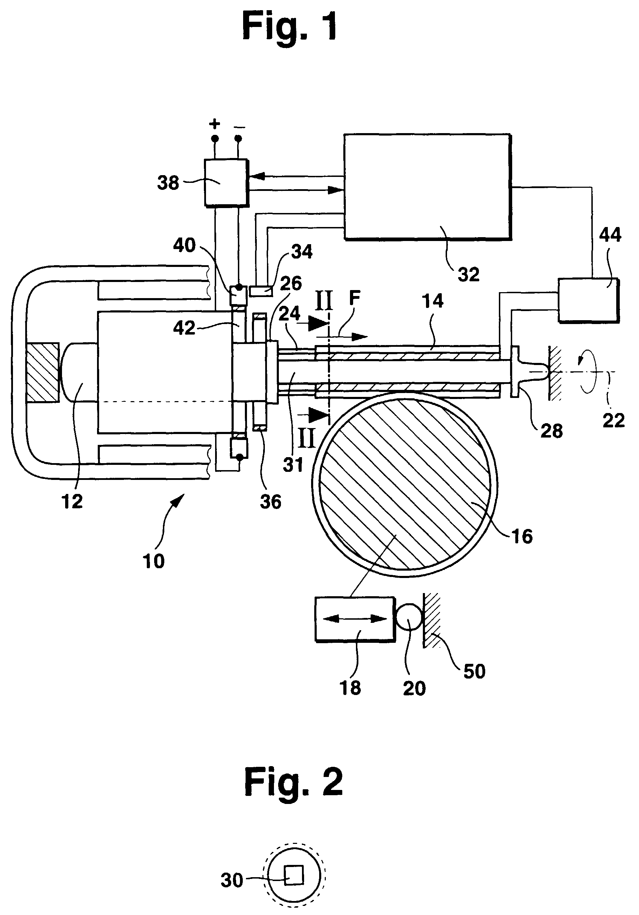

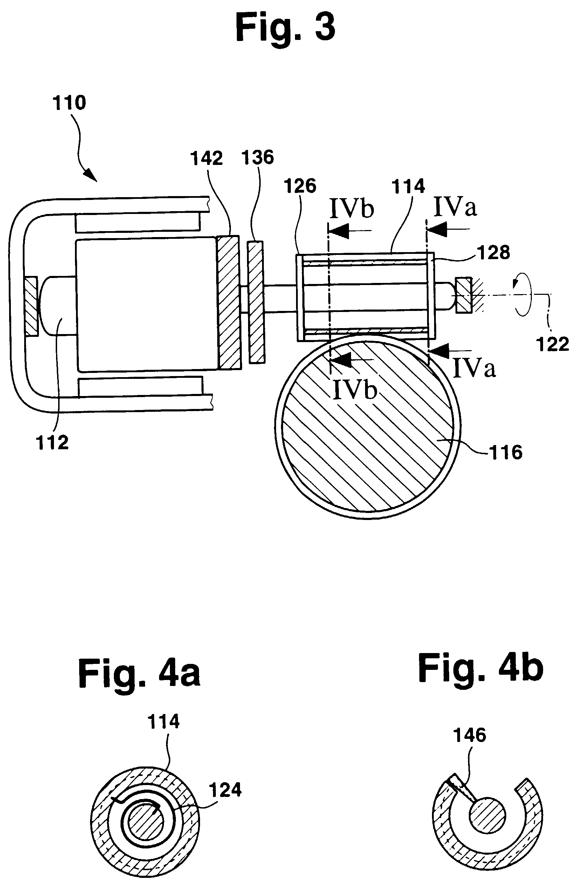

Es zeigen die Figur 1 eine schematische Darstellung eines, teilweise geschnittenen, erfindungsgemäßen elektromotorischen Antriebs, die Figur 2 einen Schnitt entlang der Linie II-II in der Figur 1, die Figur 3 eine schematische Darstellung eines elektromotorischen Antriebs nach Anspruch 10, die Figur 4a einen Schnitt entlang der Linie IVa-IVa in der Figur 3 und die Figur 4b einen Schnitt entlang der Linie IVb-IVb in der Figur 3.

Beschreibung des Ausführungsbeispiels

Der in der Figur 1 dargestellte elektromotorische Antrieb 10 weist eine Motorankerwelle 12 auf, an der eine Getriebeschnecke 14 angeordnet ist. Die Getriebeschnecke 14 steht mit einem Schneckenrad 16 in Eingriff. Über das Schneckenrad 16 wird ein Stellteil 18 bewegt, von dem die Gefahr des Einklemmens eines Gegenstandes oder Körperteils 20 ausgeht.

Die Getriebeschnecke 14 ist axial in Richtung der Drehachse 22 der Motorankerwelle 12 gegen eine Kraft F beweglich. Gleichzeitig ist die Getriebeschnecke 14 drehfest an der Motorankerwelle 12 angeordnet und vermag so bei Drehung der Motorankerwelle 12 das Schneckenrad 16 zu bewegen.

Die Kraft F wird durch ein Federmittel 24, hier in Form einer Spiralfeder, zwischen einer Anlaufscheibe 26, die fest an der Motorankerwelle 12 angeordnet ist und der axial beweglichen Getriebeschnecke 14 aufgebracht. Damit ist die Kraft, gegen die die Motorankerwelle sich an der Anlaufscheibe 26 als Anlaufelement abstützt, abhängig von der axialen Entfernung der Getriebeschnecke 14 von einer zweiten Anlaufscheibe 28, die ebenfalls drehfest an der Motorankerwelle 12 angeordnet ist. Im Ruhezustand und ohne äußere Kräfte drückt das vorgespannte Federmittel 24 die Getriebeschnecke 14 gegen das zweite Anlaufelement 28. Dadurch ist eine Normalposition der Getriebeschnecke 14 vorgegeben.

Das Federmittel 24 ist vorgespannt, so daß eine Schwelle für die vom Antrieb 10 auf das Stellteil 18 ausgeübte Kraft vorgegeben ist, bei deren Überschreitung in einer bestimmten Drehrichtung des Motors die Getriebeschnecke 14 sich vom zweiten Anlaufelement 28 in Richtung des ersten Anlaufelements 26 zu bewegen beginnt.

Um eine Drehung der Getriebeschnecke 14 relativ zur Motorankerwelle 12 zu verhindern, weist die Getriebeschnecke 14 eine Ausnehmung 30 mit nicht kreisförmigem Querschnitt auf, und ein Abschnitt 31 der Motorankerwelle 12, der durch den möglichen Bewegungsbereich der Getriebeschnecke 14 zwischen den beiden Anlaufscheiben 26 und 28 vorgegeben ist, durchgreift die Ausnehmung 30 formschlüssig, aber axial verschiebbar. Im Ausführungsbeispiel hat die Ausnehmung 30 im Querschnitt ein Vierkantprofil, wie in der Figur 2 dargestellt ist, denkbar ist aber auch ein beliebiges anderes Mehrkantprofil oder auch ein Nut- oder Keilprofil.

Der elektromotorische Antrieb 10 wird zum Bewegen eines Kraftfahrzeug-Fensters oder -Schiebedachs als Stellteil 18 eingesetzt. Bei diesem Einsatz ist nur in einer Bewegungsrichtung des Stellteils eine Einklemmgefahr gegeben. Entsprechend ist die Mechanik zum Bewegen des Stellteils 18 so ausgelegt, daß die Getriebeschnecke 14 nur bei Bewegung des Stellteils 18 gegen einen Anschlag 50 oder ein Hindernis gegen die Kraft des Federmittels 24 bewegbar ist. Dadurch wird die Gesamtfederrate des Systems bei Anlaufen des Stellteils 18 gegen den Endanschlag 50 oder gegen ein Hindernis verringert, und die Energie- und Impulsübertragung gewährleistet.

An der Motorankerwelle 12 ist zusätzlich ein Verschiebungssensor 44 angeordnet, der die Verschiebung der Getriebeschnecke 14 relativ zur Motorankerwelle 12, insbesondere durch Kraftmessung der Motorankerwelle 12 auf den Verschiebungssensor 44, beispielsweise ein Piezoelement, erfaßt. Seine Signale sind der signalverarbeitenden Anordnung 32 zugeführt und werden von dieser zusätzlich zur Bestimmung der Kraft bzw. des Drehmomentes, das der Antrieb 10 abgibt, ausgewertet. Diese Art der Kraftbestimmung kann zusätzlich zur Auswertung des Bewegungsverhaltens, aber auch alternativ erfolgen.

In einem zweiten Ausführungsbeispiel, das in der Figur 3 dargestellt ist, ist die Getriebeschnecke 114 in Richtung der Drehachse 122 der Motorankerwelle 112 in axialer Richtung fest, in dem sie gegen zwei Anlaufelemente 126 und 128 anläuft. In Drehrichtung der Motorankerwelle 112 ist sie dagegen gegen eine Kraft relativ zu der Motorankerwelle 112 beweglich angeordnet. Zwischen der Getriebeschnecke 114 und der Motorankerwelle 112 ist eine mit ihren beiden Enden an den beiden Bauteilen befestigte Spiralfeder 124 gemäß Figur 4a als Federmittel angeordnet.

In einer der Drehrichtungen, insbesondere der Richtung zum Schließen des Stellteils 18 gegen einen Anschlag 50, läuft die Getriebeschnecke 114 deshalb gegen die Kraft des Federmittels 124 mit der Motorankerwelle 112 mit. In der anderen Richtung, insbesondere beim Öffnen des Stellteils 18, wird beispielsweise die Relativbewegung der Getriebeschnecke 114 zu der Motorwelle 112 durch einen Anschlag 146 gemäß Figur 4b direkt oder erst nach einem vorgegebenen Kraftaufbau unterbunden.

Auch in diesem Ausführungsbeispiel ist die Gesamtfederrate des Systems in einer der Drehrichtungen verringert, und es kann eine beträchtliche Dämpfung bei Anlaufen eines Stellteils gegen einen Anschlag 50 oder ein Hindernis 20 erzielt werden.

Die Erfindung betrifft auch ein Verfahren zum Betreiben eines elektromotorischen Antriebs, das in beiden Ausführungsformen nach den Figuren 1 und 2 bzw. 3 und 4 umgesetzt ist. Das Verfahren wird ausgeführt durch eine signalverarbeitende Anordnung 32, die den Antrieb 10, 110 in Abhängigkeit von Verstellbefehlen sowie der auf den Endanschlag 50 oder das Hindernis 20 ausgeübten Kraft und weiterer Parameter steuert oder regelt. Der signalverarbeitenden Anordnung 32 sind die Signale eines Hall-Sensors 34 zugeführt, der mit einem auf der Motorankerwelle 12, 112 angeordneten Ringmagnet 36, 136 zur Bestimmung des Drehwinkels der Motorankerwelle 12, 112 und daraus abgeleiteter Größen zusammenwirkt. Dazu beeinflußt die signalverarbeitende Anordnung 32 eine Motortreiberschaltung 38 über die der Antrieb 10, 110 durch Bürsten 40, die mit der Motortreiberschaltung 38 verbunden sind, mit Energie versorgt wird und den zur Verfügung gestellten Strom über einen Kommutator 42, 142 einspeist.

Ein Verschiebungssensor 44, beispielsweise ein Piezoelement, erfaßt die auf diesen durch die Getriebschnecke 14 aufgebrachte Kraft F. Bei dem Erreichen eines Anschlags 50 oder beim Einklemmen eines Hindernisses 20 wird die Getriebeschnecke gegen die Kraft F verschoben. Die durch den Verschiebungssensor 44 detektierte Kraft verringert sich daher. Die signalverarbeitende Anordnung 32 ermittelt aus der detektierten Kraft das Bewegungsverhalten des Stellteils 18 oder des Antriebs 10. Überschreitet die Kraft einen vorgebbaren Grenzwert, so wird der Antrieb 10 angehalten oder reversiert.

Aus den Signalen des Hall-Sensors 34 ermittelt die signalverarbeitende Anordnung 32 ebenfalls das Bewegungsverhalten des Stellteils 18 und reversiert den Antrieb 110 oder hält ihn an.

Weiterhin wird zusätzlich oder alternativ zu der Erfassung und Auswertung der Hall-Sensorsignale der durch den Elektromotor 10, 110 fließende Strom ausgewertet, indem die Motortreiberschaltung 38 einen von der Größe des Motorstroms abgeleitetes Signal an die signalverarbeitende Anordnung 32 abgibt. Zum einen kann aus der Absolutgröße des Motorstroms das Drehmoment an der Antriebswelle 12, 112 ermittelt werden, zum anderen sind dem im wesentlich konstanten Motorstrom hochfrequente Signalanteile überlagert, die proportional zur Drehzahl und damit auch zum Drehwinkel des Motors des Antriebs 10, 110 sind.

Aus den inkrementellen Signalen des Magnet- oder Hallsensors 34, aus den aus dem Motorstrom abgeleiteten Signalen oder aus beiden Signalen gemeinsam kann die Drehzahl, und daraus die Position des Stellteils 18, seine Geschwindigkeit, seine Beschleunigung oder weitere, davon abgeleitete Größen wie das Drehmoment, daß der Antrieb 10, 110 erzeugt, ermittelt werden.

Die signalverarbeitende Anordnung 32 zieht diese Größen heran, um ein Einklemmen eines Gegenstandes 20 erkennen zu können. Gleichzeitig erfaßt sie die Position des Stellteils 18 und legt einen Grenzwert für die einzuhaltende Maximalkraft, die das Stellteil 18 auf einen Anschlag oder einen Gegenstand 20 ausüben kann, in Abhängigkeit von der Position fest.

Die Kräfte und Positionen sind durch gesetzliche Vorschriften vorgegeben: Bei einem Abstand größer als 25 mm des Stellteils 18 vom Endanschlag darf eine Kraft von 100 N auf einen eingeklemmten Gegenstand 20 mit einer Federkonstanten von mindestens 20 N/mm, bei einem Abstand von 25 mm oder kleiner darf eine Kraft von 100 N bei einer Federkonstanten von mindestens 65 N/mm des eingeklemmten Gegenstandes 20 nicht überschritten werden.

**Patentansprüche**

1. Elektromotorischer Antrieb (10) mit einem Elektromotor mit einer in ein Getriebe eingreifenden Motorankerwelle (12), die getriebeseitig eine Getriebeschnecke (14) aufweist, die mit einem Schneckenrad (16) in Eingriff steht, dadurch gekennzeichnet, daß die Getriebeschnecke (14) in Richtung der Drehachse (22) der Motorankerwelle (12) in wenigstens einer axialen Richtung gegen eine Kraft (F) beweglich und in Drehrichtung der Motorankerwelle (12) drehfest an der Motorankerwelle (12) angeordnet ist.

2. Elektromotorischer Antrieb nach Anspruch 1, dadurch gekennzeichnet, daß die Kraft (F) abhängig von der axialen Entfernung von einer Normalposition der Getriebeschnecke (14) zunimmt.

3. Elektromotorischer Antrieb nach Anspruch 2, dadurch gekennzeichnet, daß die Getriebeschnecke (14) gegen die Kraft wenigstens eines Federmittels (24) in axialer Richtung zur Motorankerwelle (12) beweglich ist.

4. Elektromotorischer Antrieb nach Anspruch 3, dadurch gekennzeichnet, daß sich die wenigstens eine Feder (24) über ein Anlaufelement (26) an der Motorankerwelle (12) abstützt.

5. Elektromotorischer Antrieb nach einem der vorhergehenden Ansprüche, dadurch gekennzeichnet, daß die Getriebeschnecke (14) eine Ausnehmung (30) mit nicht kreisförmigem Querschnitt aufweist, und daß die Motorankerwelle (12) im Bewegungsbereich der Getriebeschnecke (14) einen Abschnitt (31) aufweist, der diese Ausnehmung (30) der Getriebeschnecke (14) formschlüssig, aber axial verschiebbar durchgreift.

6. Elektromotorischer Antrieb nach Anspruch 5, dadurch gekennzeichnet, daß der Querschnitt der Ausnehmung (30) ein Mehrkantprofil, vorzugsweise ein Vierkantprofil, aufweist.

7. Elektromotorischer Antrieb nach einem der vorhergehenden Ansprüche, dadurch gekennzeichnet, daß der Antrieb (10) ein gegen wenigstens einen Endanschlag (50) bewegbares Stellteil (18) antreibt und die Getriebeschnecke (14) bei Bewegung des Stellteils (18) gegen ein Hindernis (20), insbesondere den Endanschlag (50), gegen die Kraft (F) bewegbar ist.

8. Elektromotorischer Antrieb nach Anspruch 7, gekennzeichnet durch ein Kraftfahrzeug-Fenster oder - Schiebedach als bewegbares Stellteil (18) .

9. Elektromotorischer Antrieb nach einem der vorhergehenden Ansprüche, dadurch gekennzeichnet, daß Mittel (44) zur Erfassung der axialen Verschiebung der Getriebeschnecke (14) vorgesehen sind.

10. Elektromotorischer Antrieb (110) mit einem Elektromotor mit einer in ein Getriebe eingreifenden Motorankerwelle (112), die getriebeseitig eine Getriebeschnecke (114) aufweist, die mit einem Schneckenrad (116) in Eingriff steht, dadurch gekennzeichnet, daß die Getriebeschnecke (114) in Richtung der Drehachse (122) der Motorankerwelle (112) in axialer Richtung fest und in einer Drehrichtung der Motorankerwelle (112) gegen eine Kraft beweglich relativ zu der Motorankerwelle (112) angeordnet ist.

**11.** Elektromotorischer Antrieb nach Anspruch 10, dadurch gekennzeichnet, daß die Getriebeschnecke (114) gegen die Kraft wenigstens eines Federmittels (124) relativ zur Motorankerwelle (112) beweglich ist.

**12.** Verfahren zum Betreiben eines elektromotorischen Antriebs (10, 110) nach einem der Ansprüche 1 bis 11, und mit einer signalverarbeitenden Anordnung (32), die den Antrieb (10, 110) in Abhängigkeit der von dem Stellteil (18) auf den Endanschlag (50) oder das Hindernis (20) ausgeübten Kraft sowie weiterer Parameter steuert oder regelt, dadurch gekennzeichnet, daß die von dem Stellteil (18) auf den Endanschlag (50) oder das Hindernis (20) ausgeübte Kraft durch Erfassung und Auswertung der Bewegungscharakteristik des Stellteils (18) und/oder des Antriebs (10, 110) ermittelt wird, und der Antrieb (10, 110) angehalten oder reversiert wird, wenn die bestimmte Kraft einen vorgebbaren Grenzwert in der signalverarbeitenden Anordnung (32) überschreitet.

**13.** Verfahren nach Anspruch 12, dadurch gekennzeichnet, daß die Bewegungscharakteristik durch Auswertung der durch die Getriebeschnecke (14) des Antriebs (10) auf einen Verschiebungssensor (44), insbesondere ein Piezoelement, aufgebrachten Kraft in Richtung der Drehachse (22) der Motorankerwelle (12).

**14.** Verfahren nach Anspruch 12, dadurch gekennzeichnet, daß die Bewegungscharakteristik durch Auswertung des Motorstroms des Antriebs (10, 110) und/oder einer davon abgeleiteten Größe bestimmt wird.

**15.** Verfahren nach einem der Ansprüche 12 oder 14, dadurch gekennzeichnet, daß die Bewegungscharakteristik durch Auswertung der Signale eines Drehzahlsensors (34) im Antrieb (10, 110), insbesondere eines inkrementellen Bewegungssensors, bestimmt wird.

**16.** Verfahren nach einem der Ansprüche 12 bis 15, dadurch gekennzeichnet, daß zur Erfassung der Bewegungscharakteristik die Position und/oder die Geschwindigkeit und/oder die Beschleunigung und/oder die Drehzahl oder davon abgeleitete Größen des Stellteils (18) und/oder des Antriebs (10, 110) ermittelt werden.

**17.** Verfahren nach einem der Ansprüche 12 bis 16, dadurch gekennzeichnet, daß der Grenzwert abhängig von der Position des Stellteils (18), insbesondere nach Maßgabe gesetzlicher Vorschriften, festgelegt wird.

**18.** Verfahren nach einem der vorhergehenden Ansprüche, dadurch gekennzeichnet, daß der Bewegungsweg des Stellteils (18) erfaßt und durch die signalverarbeitende Anordnung (32) ausgewertet wird.

EP 0 928 872 A1

# Fig. 1

# Fig. 2

# Fig. 3

# Fig. 4a

# Fig. 4b

Europäisches
Patentamt

**EUROPÄISCHER RECHERCHENBERICHT**

Nummer der Anmeldung

EP 98 12 1086

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X<br>Y | US 2 317 490 A (SIMPSON) 27. April 1943<br>* Spalte 1 - Spalte 2 *<br>--- | 1-3,7,8<br>4-6,9,<br>12-18 | E05F15/00<br>E05F15/16<br>F16H35/10<br>G01L3/14 |
| Y<br><br>A | US 4 979 603 A (WHEATLAND GRAHAM)<br>25. Dezember 1990<br>* Zusammenfassung *<br>* Spalte 5, Zeile 2 - Zeile 5; Abbildungen *<br>--- | 4<br><br>1,5 | G01L5/00<br>G01L5/12<br>H02K7/116 |
| Y | DE 43 02 143 A (BROSE FAHRZEUGTEILE)<br>28. Juli 1994<br>* Spalte 6, Zeile 48 - Zeile 52 *<br>* Spalte 7, Zeile 28 - Zeile 34; Abbildungen *<br>--- | 5,6 | |
| Y | WO 96 38645 A (BOSCH GMBH ROBERT ;BERTSCH HANS (DE)) 5. Dezember 1996<br>* Seite 1 - Seite 6; Abbildungen *<br>--- | 9,12-16,<br>18 | |
| D,Y | DE 296 13 281 U (SIEMENS AG) 28. Mai 1997<br>* Seite 2, letzter Absatz *<br>--- | 17 | RECHERCHIERTE SACHGEBIETE (Int.Cl.6) |
| X<br><br>A | FR 2 741 948 A (ROCKWELL LVS) 6. Juni 1997<br><br>* Zusammenfassung *<br>* Seite 1, Zeile 10 - Zeile 24; Abbildungen *<br>--- | 10-12,<br>14-16<br>1 | E05F<br>G01L<br>F16H<br>H02K |
| A | EP 0 318 345 A (ROCKWELL CIM) 31. Mai 1989<br>* Zusammenfassung *<br>--- | 10,11 | |
| A | FR 2 394 662 A (DAIMLER-BENZ)<br>12. Januar 1979<br>* Seite 2, Zeile 7 - Zeile 9; Abbildungen *<br>--- | 13 | |

-/--

Der vorliegende Recherchenbericht wurde für alle Patentansprüche erstellt

| Recherchenort | Abschlußdatum der Recherche | Prüfer |
|---|---|---|
| DEN HAAG | 13. April 1999 | Van Kessel, J |

EPO FORM 1503 03.82 (P04C03)

Europäisches
Patentamt

**EUROPÄISCHER RECHERCHENBERICHT**

Nummer der Anmeldung

EP 98 12 1086

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| D,A | DE 44 44 762 A (BOSCH GMBH ROBERT) 20. Juni 1996 * Zusammenfassung * ----- | 12,14,18 | |

**RECHERCHIERTE SACHGEBIETE (Int.Cl.6)**

Der vorliegende Recherchenbericht wurde für alle Patentansprüche erstellt

| Recherchenort | Abschlußdatum der Recherche | Prüfer |
|---|---|---|
| DEN HAAG | 13. April 1999 | Van Kessel, J |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
............................................................................
& : Mitglied der gleichen Patentfamilie,übereinstimmendes
    Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 98 12 1086

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

13-04-1999

| Im Recherchenbericht angeführtes Patentdokument | Datum der Veröffentlichung | Mitglied(er) der Patentfamilie | Datum der Veröffentlichung |
|---|---|---|---|
| US 2317490 A | 27-04-1943 | KEINE | |
| US 4979603 A | 25-12-1990 | CA 1312746 A | 19-01-1993 |
| DE 4302143 A | 28-07-1994 | KEINE | |
| WO 9638645 A | 05-12-1996 | DE 19520114 C | 02-01-1997 |
| DE 29613281 U | 28-05-1997 | KEINE | |
| FR 2741948 A | 06-06-1997 | KEINE | |
| EP 0318345 A | 31-05-1989 | FR 2623587 A<br>DE 3869743 A<br>JP 1286752 A<br>US 4918998 A | 26-05-1989<br>07-05-1992<br>17-11-1989<br>24-04-1990 |
| FR 2394662 A | 12-01-1979 | DE 2727518 A<br>GB 1592748 A<br>JP 54008281 A | 04-01-1979<br>08-07-1981<br>22-01-1979 |
| DE 4444762 A | 20-06-1996 | CN 1170480 A<br>WO 9619858 A<br>EP 0799515 A<br>JP 10510978 T | 14-01-1998<br>27-06-1996<br>08-10-1997<br>20-10-1998 |

EPO FORM P0461

Für nähere Einzelheiten zu diesem Anhang : siehe Amtsblatt des Europäischen Patentamts, Nr.12/82